# NEUE EUROPÄISCHE PATENTSCHRIFT

(11) **EP 0 743 221 B2**
(45) Veröffentlichungstag und Bekanntmachung des Hinweises auf die Entscheidung über den Einspruch: **14.11.2007**
(45) Hinweis auf die Patenterteilung: 27.06.2001
(21) Anmeldenummer: 96103516.9
(22) Anmeldetag: 07.03.1996
(51) Int. Cl.: B60N 2/22

(54) **Verstellmechanismus für Kraftfahrzeugsitze**
Adjusting mechanism for automotive vehicle seats
Mécanisme de réglage pour sièges de véhicules automobiles

(30) Priorität: 19.05.1995 DE 19518424
(43) Veröffentlichungstag der Anmeldung: 20.11.1996
(73) Patentinhaber: Schwarzbich, Jörg, 33615 Bielefeld (DE)
(72) Erfinder: Schwarzbich, Jörg, 33615 Bielefeld (DE)
(74) Vertreter: TER MEER - STEINMEISTER & PARTNER GbR

(56) Entgegenhaltungen:
- EP-A- 0 497 007
- EP-B- 0 631 901
- DE-A- 3 115 942
- DE-A- 4 134 353
- DE-B- 1 242 948
- DE-U- 9 408 426
- US-A- 4 781 415

## Beschreibung

Die Erfindung betrifft einen Verstellmechanismus, insbesondere für Sitzversteller in Kraftfahrzeugen, zur Umsetzung einer hin- und hergehenden Bewegung eines Betätigungsorgans in eine intermittierende, gleichsinnige Bewegung eines Verstellorgans.

Ein typisches Beispiel eines herkömmlichen Verstellmechanismus dieser Art ist ein Klinkengesperre, bei dem eine Klinke in eine Zahnung des Verstellorgans eingreift, wenn das Betätigungsorgan in eine Richtung bewegt wird, während bei der Rückzugsbewegung des Betätigungsorgans die Klinke über die Zahnung des Verstellorgans gleitet.

Ein Nachteil eines solchen Klinkengesperres besteht jedoch darin, daß die Klinke bei der Rückzugsbewegung des Betätigungsorgans ein unangenehmes "ratschendes" Geräusch verursacht. Bei bestimmten Anwendungen erweist es sich auch als nachteilig, daß die Klinke und die Zahnung des Verstellorgans nicht stufenlos in beliebigen Positionen miteinander in Eingriff kommen können. Vor allem hat ein solches Klinkengesperre jedoch den Nachteil, daß es nur eine Verstellung des Verstellorgans in einer einzigen Richtung ermöglicht. Wenn eine Verstellung in beiden Richtungen gewünscht wird, ist deshalb ein sehr aufwendiger Mechanismus erforderlich, der zwei in entgegengesetzte Richtungen wirkende Klinkengesperre sowie Mechanismen zum Entriegeln des jeweils unwirksamen Gesperres aufweist.

Zur Verminderung der Geräuschbildung könnte daran gedacht werden, das Klinkengesperre durch eine richtungsgeschaltete Kupplung (Freilauf) zu ersetzen. Auch mit Hilfe eines solchen Freilaufs kann das Verstellorgan jedoch nur in einer einzigen Richtung verstellt werden, und die Aufhebung der Hemmung, wenn eine Bewegung des Verstellorgans in Gegenrichtung gewünscht wird, ist hier noch aufwendiger als bei einem Klinkengesperre.

Aufgabe der Erfindung ist es, einen einfachen und geräuscharmen Verstellmechanismus zu schaffen, der es gestattet, das Verstellorgan mit Hilfe des Betätigungsorgans in entgegengesetzte Richtungen zu bewegen.

Diese Aufgabe wird erfindungsgemäß mit den im kennzeichnenden Teil des Patentanspruchs 1 angegebenen Merkmalen gelöst.

Vorteilhafte Weiterbildungen und Ausgestaltungen der Erfindung ergeben sich aus den Unteransprüchen.

Wesentlicher Bestandteil des erfindungsgemäßen Verstellmechanismus ist eine eingangsabhängig geschaltete Kupplung. Eine solche Kupplung besitzt ein Ausgangselement und zwei Eingangselemente, die als Hemmungselement und Löseelement bezeichnet werden. Wenn eine Kraft an dem Hemmungselement angreift, um dieses in der einen oder anderen Richtung zu bewegen, so werden richtungsunabhängig sowohl das Löseelement als auch das Ausgangselement mitbewegt. Wenn dagegen die Kraft an dem Löseelement angreift, so bewegen sich lediglich das Löseelement und das Hemmungselement gemeinsam in der betreffenden Richtung, und die Antriebskraft wird nicht auf das Ausgangselement übertragen.

Ein Beispiel einer solchen eingangsabhängig geschalteten Kupplung wird in EP 0 497 007 A1 beschrieben.

Bei dem erfindungsgemäßen Verstellmechanismus bildet das Betätigungsorgan das Hemmungselement und das Verstellorgan das Ausgangselement einer solchen Kupplung. Weiterhin ist eine elastische Rückstelleinrichtung vorgesehen, die zwischen dem Löseelement der Kupplung und einem feststehenden Teil wirkt und eine Rückstellkraft auf das Löseelement ausübt, wenn dieses in irgendeiner Richtung aus seiner Ausgangsposition ausgelenkt ist.

Wenn das Betätigungsorgan in irgendeiner Richtung bewegt wird, so werden das Löseelement und das Verstellorgan in diese Richtung mitgenommen, da das Betätigungsorgan das hemmende Element der Kupplung bildet. Durch die Bewegung des Löseelements wird die Rückstelleinrichtung gespannt. Wenn man anschließend das Betätigungsorgan losläßt, so erfolgt eine Krafteinleitung in Rückstellrichtung über die Rückstelleinrichtung auf das Löseelement, mit der Folge, daß das Löseelement und das Betätigungsorgan gemeinsam in die Ausgangsposition zurückgestellt werden, während das Ausgangselement in der erreichten Position verbleibt. Durch mehrmaliges "Pumpen" mit dem Betätigungsorgan läßt sich somit das Verstellorgan beliebig weit in jeder gewünschten Richtung verstellen, wobei die Verstellrichtung davon abhängig ist, in welcher Richtung das Betätigungsorgan aus der Ausgangsposition heraus ausgelenkt wird.

Auf diese Weise wird durch die Erfindung ein äußerst bedienungsfreundlicher und dabei praktisch geräuschlos arbeitender Verstellmechanismus geschaffen.

Im folgenden werden Ausführungsbeispiele der Erfindung anhand der Zeichnung näher erläutert. Es zeigen:
- Fig. 1: einen Längsschnitt durch einen Verstellmechanismus gemäß einem ersten Ausführungsbeispiel;
- Fig. 2: einen Schnitt in der Ebene E-F in Fig. 1;
- Fig. 3: einen Schnitt in der Ebene C-D in Fig. 1;
- Fig. 4: einen Längsschnitt durch einen Verstellmechanismus gemäß einem anderen Ausführungsbeispiel;
- Fig. 5: einen Teil-Längsschnitt durch einen Verstellmechanismus gemäß einem weiteren Ausführungsbeispiel; und
- Fig. 6: einen horizontalen Schnitt durch den Verstellmechanismus gemäß Fig. 5.

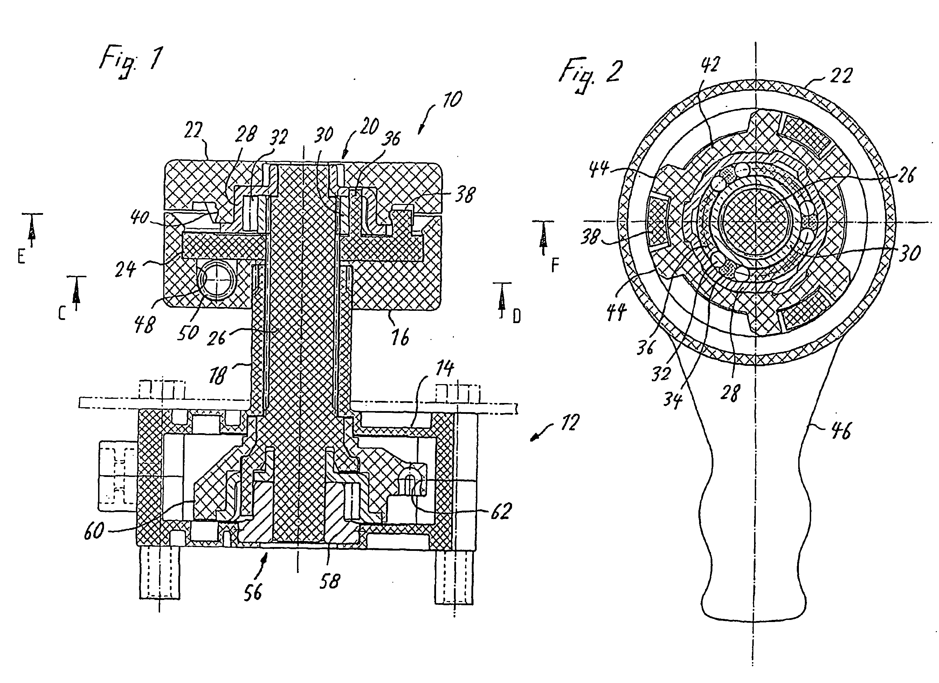

Der in Fig. 1 gezeigte Verstellmechanismus ist für den Einsatz in einem Sitzversteller eines Kraftfahrzeugs vorgesehen und dient beispielsweise zur Verstellung der Rückenlehne, zur Verstellung einer Lordosenstütze und dergleichen.

Der Verstellmechanismus umfaßt eine Betätigungseinheit 10 und eine Antriebseinheit 12, die in einem kastenförmigen Gehäuse 14 untergebracht ist. Die Betätigungseinheit 10 weist als feststehendes Teil einen tellerförmigen oder topfförmigen Träger 16 auf, der auf dem freien Ende eines rohrförmigen Fortsatzes 18 des Gehäuses 14 sitzt und drehfest mit diesem verkeilt ist. Weiterhin gehört zu der Betätigungseinheit eine eingangsabhängig geschaltete Kupplung 20 mit einem als Hemmungselement dienenden Betätigungsorgan 22, einem scheibenförmigen, drehbar in dem Träger 16 gelagerten Löseelement 24 und einem Ausgangselement in der Form einer Welle 26, die sich durch den rohrförmigen Fortsatz 18 des Gehäuses 14 in die Antriebseinheit 12 erstreckt und das Verstellorgan des Verstellmechanismus bildet.

Die Kupplung 20 ist von der Bauart, die in EP 0 497 007 A1 beschrieben wird. Das Betätigungsorgan 22, das Löseelement 24 und die Welle 26 sind koaxial zueinander angeordnet. In das Betätigungsorgan 22 ist eine topfförmige Lagerschale 28 aus Metall eingelassen, die zu dem Löseelement 24 hin offen ist. Wie in Fig. 2 zu erkennen ist, steht diese Lagerschale über nach außen weisende Vorsprünge drehfest mit dem Betätigungsorgan 22 in Eingriff. Im Inneren der Lagerschale ist ein Ring 30 aus Metall untergebracht, der drehfest auf das freie Ende der Welle 26 aufgekeilt ist. Die Innenfläche der Lagerschale 28 und die Außenfläche des Rings 30 bilden einen ringförmigen Zwischenraum, der drei Paare von Klemmrollen 32 aufnimmt. Zwischen den Klemmrollen jedes Paares ist ein elastischer Distanzkörper 34 eingefügt (Fig. 2), und die einzelnen Klemmrollen-Paare sind durch Finger 36 voneinander getrennt, die axial von dem Löseelement 24 vorspringen und in entsprechende Schlitze des Bodens der Lagerschale 28 eingreifen. Die Innenfläche der Lagerschale 28 ist jeweils an den Stellen der Distanzkörper 34 etwas nach außen ausgebaucht, so daß der zwischen der Lagerschale und dem Ring 30 gebildete Spalt sich in den Bereichen, in denen die Klemmrollen 32 liegen, keilförmig zu den Fingern 36 hin verengt.

Die in die Schlitze im Boden der Lagerschale 28 eingreifenden Finger 36 haben in Umfangsrichtung in diesen Schlitzen etwas Spiel. Das Löseelement 24 ist außerhalb der Finger 36 mit weiteren axial vorspringenden Zapfen 38 versehen, die mit entsprechenden Gegenkonturen 40 des Betätigungsorgans 22 in Rasteingriff stehen. Auf diese Weise wird das Betätigungsorgan lösbar an dem Löseelement 24 gehalten, das seinerseits in dem Träger 16 verrastet ist.

Wie in Fig. 2 zu erkennen ist, liegen die Zapfen 38 jeweils zwischen zwei radial von einem Innenring 42 des Betätigungsorgans 22 vorspringenden Klauen 44. Das Löseelement 24 und das Betätigungsorgan 22 sind somit nur innerhalb eines sehr begrenzten Spiels relativ zueinander drehbar und können darüber hinaus nur gemeinsam relativ zu dem Träger 16 und/oder dem Ring 30 verdreht werden.

Nachfolgend soll das an sich bekannte Funktionsprinzip der Kupplung 20 kurz erläutert werden. Wenn das einstückig mit einem Hebel 46 ausgebildete Betätigungsorgan 22 im Uhrzeigersinn oder im Gegenuhrzeigersinn gedreht wird, so wird diese Drehung auf die Lagerschale 28 übertragen, die deshalb die Tendenz hat, sich um den Ring 30 zu drehen. Diese Drehung wird jedoch dadurch verhindert, daß eine der Klemmrollen 32 jedes Paares in dem sich keilförmig verengenden Spalt zwischen der Lagerschale 28 und dem Ring 30 blockiert. Folglich werden auch der Ring 30 sowie die Klemmrollen 32 und die Distanzkörper 34 bei der Drehung mitgenommen, und das Löseelement 24 wird aufgrund des Eingriffs der Finger 36 zwischen die Klemmrollen 32 ebenfalls mitgedreht. Auf diese Weise wird die Schwenkbewegung des Hebels 46 bzw. die Drehbewegung des Betätigungsorgans 22 praktisch spielfrei auf den Ring 30 und die damit verkeilte Welle 26 übertragen.

Wenn dagegen das antreibende Drehmoment nicht auf das Betätigungsorgan 22, sondern auf das Löseelement 24 wirkt, so drücken die Finger 36 jeweils die in Drehrichtung gelegene Klemmrolle 32 entgegen der Kraft des elastischen Distanzkörpers 34 aus dem keilförmig verengten Bereich des Spaltes zwischen dem Ring 30 und der Lagerschale 28 heraus, so daß ein Blockieren der Klemmrollen verhindert wird. Nach einer geringen Anfangsverdrehung des Löseelements 24, spätestens dann, wenn dessen Zapfen 38 jeweils an einer der zugehörigen Klauen 44 anschlagen, wird auch das Betätigungsorgan 22 in Drehrichtung mitgenommen, während die Klemmrollen 32 auf der Außenfläche des Rings 30 abrollen. In diesem Fall nehmen somit der Ring 30 und die Welle 26 nicht an der Drehbewegung teil. Wenn die Krafteinleitung über das Löseelement 24 erfolgt, wirkt somit die Kupplung 20 in beiden Richtungen als Freilauf, das heißt, das Löseelement 24 und das Betätigungsorgan 22 können sich unabhängig von der Welle 26 drehen.

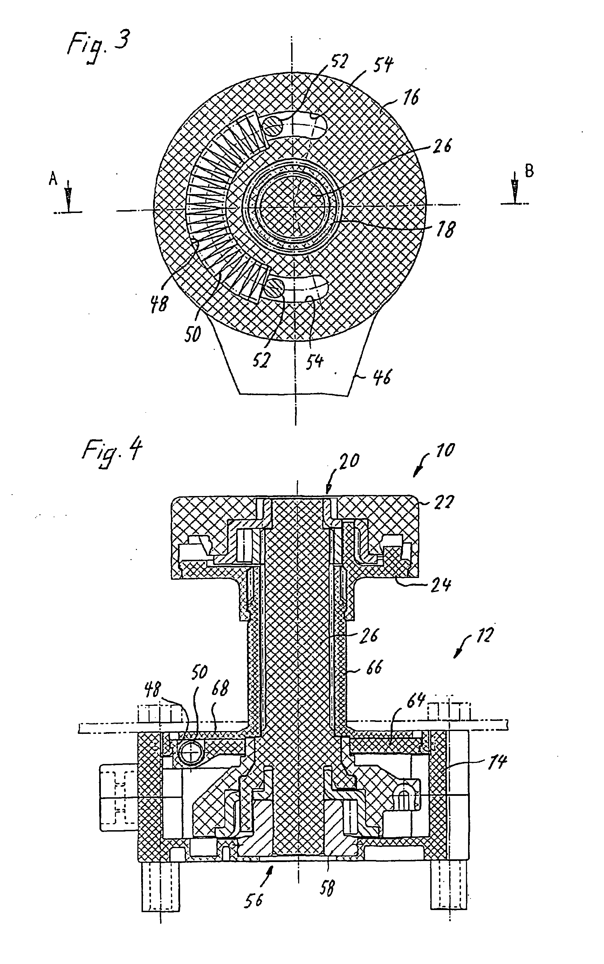

In der Bodenfläche des Trägers 16, die dem Löseelement 24 der Kupplung 20 zugewandt ist, befindet eine Nut 48, die in einem zu der Welle 26 konzentrischen Kreisbogen verläuft, wie in Fig. 3 zu erkennen ist. Diese Nut 48 nimmt eine entsprechend gebogene Schraubenfeder 50 auf, die sich mit ihren entgegengesetzten Enden an den Enden der Nut 48 sowie an zwei von dem Löseelement 24 vorspringenden Zapfen 52 abstützt. An die Enden der Nut 48 schließt sich jeweils eine auf demselben Kreisbogen verlaufende, jedoch schmalere Nut 54 an, in der sich der betreffende Zapfen 52 bewegen kann.

Die Feder 50 und die Zapfen 52 bilden eine elastische Rückstelleinrichtung, durch die das Löseelement 24, nachdem es in der einen oder anderen Richtung relativ zu dem Träger 16 verdreht wurde, wieder in die in Fig. 3 gezeigte Ausgangsstellung zurückgedreht wird. Wenn beispielsweise in Fig. 3 das mit den Zapfen 52 versehene Löseelement im Uhrzeigersinn gedreht wird, so wird die Feder 50 durch den unteren Zapfen 52 komprimiert, während sich das obere Ende der Feder am Ende der Nut 48 abstützt.

In Kombination mit der oben beschriebenen Kupplung 20 gestattet es die Rückstelleinrichtung 50,52, die Welle 26 durch pumpende Bewegungen mit dem Hebel 26 schrittweise in jeder gewünschten Richtung zu verdrehen. Wenn der Hebel 46 in einer Richtung aus der Ausgangsstellung herausgeschwenkt wird, so erfolgt die Krafteinleitung in die Kupplung 20 über das Betätigungsorgan 22, und folglich werden das Löseelement 24 und die Welle 26 in Betätigungsrichtung gedreht. Dabei wird die Feder 50 gespannt. Wenn man anschließend den Hebel 46 losläßt, so übt die gespannte Feder 50 ein Drehmoment auf das Löseelement 24 aus, und dieses Löseelement wird zusammen mit dem Betätigungsorgan 22, jedoch ohne den Ring 30 und die Welle 26 in die Ausgangsstellung zurückgedreht. Durch Wiederholung dieses Vorgangs kann somit die Welle 26 schrittweise weitergedreht werden. Wenn die Welle 26 in entgegengesetzte Richtung gedreht werden soll, so wird der Hebel 46 in der anderen Richtung aus der Ausgangsstellung herausgeschwenkt. Der Schwenkbereich des Hebels 46 wird in jeder Richtung dadurch begrenzt, daß einer der Zapfen 52 des Löseelements 24 am Ende der zugehörigen Nut 54 anschlägt. Durch entsprechende Auslegung der Nuten 48 und 54 und der Feder 50 kann somit der Schwenkbereich des Hebels 46 nach Bedarf gewählt werden.

Bei dem in Fig. 1 gezeigten Ausführungsbeispiel nimmt die Antriebseinheit 12 eine weitere eingangsabhängig geschaltete Kupplung 56 auf, die nach dem gleichen Prinzip aufgebaut ist wie die oben beschriebene Kupplung 20. Das in Fig. 1 untere Ende der Welle 26 bildet das Löseelement dieser Kupplung, und das Gegenstück zu dem Ring 30 wird durch eine gehäusefeste Buchse 58 gebildet, die zugleich als Lager für die Welle 26 dient. Das Hemmungselement 60 der Kupplung 56 ist ein ringförmiger Körper, der an seinem äußeren Umfang, innerhalb des Gehäuses 14, eine radial vorspringende Aufnahme 62 trägt, in der sich das Ende eines Bowdenzuges verankern läßt. Über die Kupplung 56 kann folglich mit Hilfe der Welle 26 der Bowdenzug in jeder gewünschten Richtung verstellt werden. Wenn jedoch umgekehrt durch den Bowdenzug eine Kraft auf das Hemmungselement 60 ausgeübt wird, so wird dieses Hemmungselement durch die Kupplung 56 in der eingestellten Position blockiert.

Wenn der erwähnte Bowdenzug beispielsweise mit einem beweglichen Teil einer Lordosenstütze verbunden ist, so läßt sich die Lordosenstütze mit Hilfe des beschriebenen Verstellmechanismus beliebig einstellen, und sie ist bei unbetätigtem Verstellmechanismus automatisch in der jeweils eingestellten Position blockiert.

Fig. 4 zeigt ein abgewandeltes Ausführungsbeispiel, bei dem die Rückstelleinrichtung im Gehäuse 14 der Antriebseinheit 12 untergebracht ist, so daß der in Fig. 1 gezeigte Träger 16 entfallen kann. Das feststehende Teil, das die Feder 50 aufnimmt, wird hier durch einen etwas nach innen abgesetzten Deckel 64 des Gehäuses 14 gebildet. Anstelle des rohrförmiges Fortsatzes 18 des Gehäuses in Fig. 1 ist hier eine Hohlwelle 66 vorgesehen, auf deren freies Ende das Löseelement 24 aufgerastet ist und die drehfest mit dem Löseelement verkeilt ist. Die Hohlwelle 66 trägt am unteren Ende einen Flansch 68, der mit dem Deckel 64 verrastet ist und innerhalb eines begrenzten Bereichs relativ zu den Deckel 68 drehbar ist. Dieser Flansch 68 trägt die (in Fig. 4 nicht gezeigten) Stifte 52, die mit der Feder 50 zusammenwirken.

Wahlweise ist es selbstverständlich möglich, auch die Kupplung 20 in das Gehäuse 14 zu integrieren, so daß aus dem Gehäuse 14 lediglich ein mit dem Hemmungselement dieser Kupplung verbundener Stutzen herausgeführt wird, der das Betätigungsorgan bildet und beispielsweise einen dem Hebel 46 entsprechenden Hebel trägt.

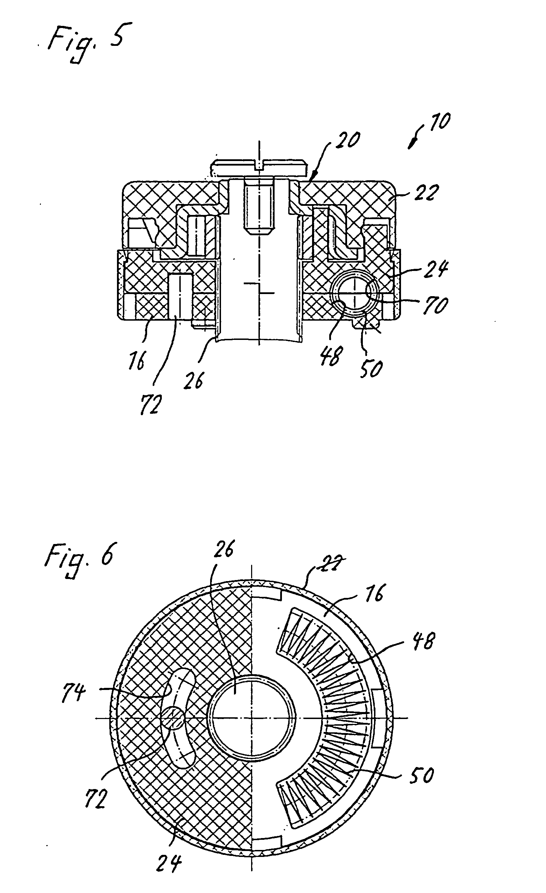

Fig. 5 und 6 zeigen eine abgewandelte Ausführungsform der Rückstelleinrichtung. Die in dem Träger 16 ausgebildete bogenförmige Nut 48 hat hier nur einen halbkreisförmigen Querschnitt, und eine dazu komplementäre Nut 70 ist in dem Löseelement 24 ausgebildet. Die beiden Nuten 48 und 70 haben in Umfangsrichtung die gleiche Länge und bilden zusammen eine bogenförmige Kammer, in der die Feder 50 untergebracht ist. Wenn sich das Löseelement 24 in der Ausgangsstellung befindet, stützt sich die Feder 50 mit jedem ihrer Enden sowohl am Boden der Nut 70 als auch am Boden der Nut 48 ab. Wenn das Löseelement 24 jedoch aus der Ausgangsstellung herausgedreht wird, stützt sich die Feder 50 nur am Boden der Nut 70 dieses Löseelements und mit dem anderen Ende nur am Boden der Nut 48 des Trägers 16 ab, so daß die Feder komprimiert wird.

Zur Begrenzung des Schwenkbereichs des Löseelements 24 und damit des Betätigungsorgans 22 ist im gezeigten Beispiel der Träger 16 mit einem vorspringenden Stift 72 versehen, der in eine bogenförmige Nut 74 des Löseelements 24 eingreift. Selbstverständlich ist auch die umgekehrte Anordnung von Stift und Nut möglich. Wahlweise kann der Schwenkbereich auch dadurch begrenzt werden, daß die Feder 50 auf Block komprimiert wird.

Während bei den gezeigten Ausführungsbeispielen das Betätigungsorgan, das Löseelement und das Verstellorgan als drehbare Teile ausgebildet sind, ist es auch möglich, diese Bauteile als linear bewegliche Elemente zu gestalten. Die Kupplung 20 ist dann als Linearkupplung ausgebildet, wobei der Ring 30 und die damit zusammenwirkenden Teile durch ihre jeweilige Abwicklung ersetzt sind.

Der erfindungsgemäße Verstellmechanismus kann außerdem auch eingangs- und/oder ausgangsseitig mit einem Getriebe kombiniert sein. So ist es beispielsweise denkbar, daß das Gehäuse 14 in Figur 1 ein Planetengetriebe, ein Stirnradgetriebe, einen Riementrieb oder dergleichen aufnimmt, dessen Eingangselement durch die Welle 26 oder gegebenenfalls auch durch das Hemmungselement 60 der Kupplung 56 gebildet wird. Dieses Getriebe kann koaxial zu der Welle 26 oder seitlich neben dieser Welle angeordnet sein.

## Patentansprüche

1. Verstellmechanismus, insbesondere für Sitzversteller in Kraftfahrzeugen, zur Umsetzung einer hin- und hergehenden Bewegung eines Betätigungsorgans (22) in eine intermittierende, gleichsinnige Bewegung eines Verstellorgans (26), **gekennzeichnet durch**:
- eine eingangsabhängig geschaltete Kupplung (20), die ein Hemmungselement und ein Löseelement (24) in beiden Drehrichtungen mit einem Ausgangselement (26) koppelt, wenn die Krafteinleitung über das Hemmungselement erfolgt, und die in beiden Richtungen als Freilauf zwischen dem Hemmungselement und dem Löseelement einerseits und dem Ausgangselement andererseits wirkt, wenn die Krafteinleitung über das Löseelement erfolgt, und deren Hemmungselement **durch** das Betätigungsorgan (22) gebildet wird, während das Ausgangselement **durch** das Verstellorgan (26) gebildet wird, und
- eine elastische Rückstelleinrichtung (48,50,52; 70), die zwischen dem Löseelement (24) und einem festen Teil (16; 64) wirkt und eine Rückstellkraft auf das Löseelement (24) ausübt, wenn dieses in irgendeiner Richtung aus seiner Ausgangsstellung ausgelenkt ist
- wobei die Kupplung (20) mehrere Paare von Klemmkörpern (32) aufweist, die in einem Spalt zwischen einer in bezug auf das Betätigungsorgan (22) festen Lauffläche und einer in bezug auf das Verstellorgan (26) festen Lauffläche untergebracht sind, zwischen den Klemmkörpern (32) jedes Paares ein elastischer Distanzkörper (34) eingefügt ist, während zwischen den Klemmkörpern der verschiedenen Paare gelegene Abschnitte des Spaltes **durch** Finger (36) des Löseelements (24) ausgefüllt werden, sich der Spalt jeweils von dem Distanzkörper (34) aus in Richtung auf die benachbarten Finger (36) keilförmig verengt und das Betätigungsorgan (22) mit dem Löseelement (24) gekoppelt und relativ zu diesem in jeder Richtung nur innerhalb eines begrenzten Spiels beweglich ist.

2. Verstellmechanismus nach Anspruch 1, **dadurch gekennzeichnet, daß** die Rückstelleinrichtung eine Schraubenfeder (50) aufweist und daß das Löseelement (24) sowie das feststehende Teil (16; 64) an jedem Ende der Schraubenfeder je ein Widerlager für die Schraubenfeder bilden.

3. Verstellmechanismus nach Anspruch 2, **dadurch gekennzeichnet, daß** das Betätigungsorgan (22), das Löseelement (24) und das Verstellorgan (26) relativ zu dem feststehenden Teil (16: 64) um eine gemeinsame Achse drehbar sind und daß die Schraubenfeder (50) in einer kreisbogenförmigen, zu dieser Drehachse konzentrischen Nut (48; 70) des feststehenden Teils und/oder des Löseelements untergebracht ist.

4. Verstellmechanismus nach Anspruch 2 oder 3, **dadurch gekennzeichnet, daß** die Schraubenfeder (50) in einer Nut (48) des feststehenden Teils (16: 64) oder des Löseelements (24) untergebracht ist, daß die Enden dieser Nut (48) die Widerlager des betreffenden Bauteils für die Enden der Schraubenfeder (50) bilden und daß die Widerlager des jeweiligen anderen Bauteils durch Zapfen (52) gebildet werden, die in der die Schraubenfeder (50) aufnehmenden Nut (48) sowie in diese Nut verlängernden schmaleren Nuten (54) beweglich sind.

5. Verstellmechanismus nach Anspruch 2 oder 3, **dadurch gekennzeichnet, daß** die Schraubenfeder (50) je zur Hälfte in einer Nut (48) des feststehenden Teils (16; 64) und einer hierzu komplementären Nut (70) des Löseelements (24) untergebracht ist und daß die Enden der beiden Nuten die Widerlager für die Schraubenfeder bilden.

6. Verstellmechanismus nach einem der vorstehenden Ansprüche, **dadurch gekennzeichnet, daß** das Verstellorgan (26) eine Welle ist und daß das Betätigungsorgan (22) und das Löseelement (24) koaxial auf dieser Welle angeordnet sind.

7. Verstellmechanismus nach einem der vorstehenden Ansprüche, **gekennzeichnet durch** eine weitere eingangsabhängig geschaltete Kupplung (56), deren Löseelement **durch** das Verstellorgan (26) gebildet wird und deren Ausgangselement eine gehäusefeste Buchse (58) ist, so daß das Hemmungselement (60) dieser Kupplung **durch** das Verstellorgan (26) verstellbar und **durch** die Buchse (58) in der jeweils eingestellten Position fixierbar ist.

8. Verstellmechanismus nach Anspruch 7, **dadurch gekennzeichnet, daß** das Hemmungselement (60) der weiteren Kupplung (56) eine Aufnahme (62) für mindestens ein Ende eines Kabelzuges aufweist.

9. Verstellmechanismus nach einem der vorstehenden Ansprüche, **dadurch gekennzeichnet, daß** das Verstellorgan (26) mittelbar oder unmittelbar mit einem Getriebe gekoppelt ist.

## Claims

1. Adjusting mechanism, especially for seat adjusters in motor vehicles, for converting a reciprocating movement of an operating member (22) into an intermittent movement of an adjusting member (26) in the same direction,
**characterised by**:
- a clutch (20) which is engaged and disengaged in an input-dependent manner and which couples an inhibiting element and a release element (24) in both directions of rotation to an output element when the introduction of force takes place by way of the inhibiting element, and which acts in both directions as a freewheel between the inhibiting element and the release element, on the one hand, and the output element, on the other hand, when the introduction of force takes place by way of the release element, and the inhibiting element of which is formed by the operating member (22), while the output element is formed by the adjusting member (26), and
- a resilient restoring device (48, 50, 52; 70) which acts between the release element (24) and a fixed part (16; 64) and exerts a restoring force on the release element (24) when the latter is displaced out of its starting position in any direction,
- wherein the clutch (20) has several pairs of clamping bodies (32) which are accommodated in a gap between a running face, which is fixed relative to the operating member (22), and a running face, which is fixed relative to the adjusting member (26), a resilient distance body (34) is inserted between the clamping bodies (32) of each pair, while portions of the gap which are located between the clamping bodies of the various pairs are filled by fingers (36) of the release element (24), the gap narrows in a wedge-shape from each distance body (34) in the direction towards the respective adjacent finger (36), and the operating member (22) is coupled to the release element (24) and is movable only by a limited amount relative thereto in any direction.

2. Adjusting mechanism according to claim 1, **characterised in that** the restoring device has a helical spring (50) and **in that** the release element (24) and the fixed part (16; 64) form, at each end of the helical spring, a respective abutment for the helical spring.

3. Adjusting mechanism according to claim 2, **characterised in that** the operating member (22), the release element (24) and the adjusting member (26) are rotatable relative to the fixed part (16; 64) about a common axis, and **in that** the helical spring (50) is accommodated in an arc-shaped groove (48; 70) of the fixed part and/or of the release element, which groove (48; 70) is concentric with that axis of rotation.

4. Adjusting mechanism according to claim 2 or 3, **characterised in that** the helical spring (50) is accommodated in a groove (48) of the fixed part (16; 64) or of the release element (24), **in that** the ends of that groove (48) form the abutments for the ends of the helical spring (50) of the one component (16: 64) concerned, and **in that** the abutments of the other component (24) are formed by pegs (52) which are movable in the groove (48) receiving the helical spring (50) and in narrower grooves (54) extending that groove.

5. Adjusting mechanism according to claim 2 or 3, **characterised in that** one half of the helical spring (50) is accommodated in a groove (48) of the fixed part (16; 64) and the other half is accommodated in a complementary groove (70) of the release element (24), and **in that** the ends of the two grooves form the abutments for the helical spring.

6. Adjusting mechanism according to any one of the preceding claims, **characterised in that** the adjusting member (26) is a shaft and **in that** the operating member (22) and the release element (24) are arranged coaxially on that shaft.

7. Adjusting mechanism according to any one of the preceding claims, **characterised by** a further clutch (56) which is engaged and disengaged in an input-dependent manner and the release element of which is formed by the adjusting member (26) and the output element of which is a bush (58) fixed to a housing, so that the inhibiting element (60) of that clutch is adjustable by the adjusting member (26) and is fixable by the bush (58), fixed to the housing, in the particular position adjusted.

8. Adjusting mechanism according to claim 7, **characterised in that** the inhibiting element (60) of the further clutch (56) has a receiving portion (62) for at least one end of a cable assembly.

9. Adjusting mechanism according to any one of the preceding claims, **characterised in that** the adjusting member (26) is coupled indirectly or directly to a gear.

## Revendications

1. Mécanisme de réglage, en particulier pour des commandes de réglage de sièges dans das véhicules automobiles, servant à convertir un mouvement de va-et-vient d'un organe d'actionnement (22) en un mouvement intermittent de même sens d'un organe de réglage (26), **caractérisé par**
- un accouplement (20) manoeuvré en fonction de l'entrée, qui accouple un élément d'arrêt et un élément de libération (24) dans les deux directions de rotation avec un élément de sortie lorsque l'introduction de force s'effectue à travers l'élément d'arrêt, et qui agit dans les deux directions comme dispositif à roue libre entre, d'une part, l'élément d'arrêt et l'élément de libération et, d'autre part, l'élément de sortie lorsque l'introduction de force s'effectue à travers l'élément de libération, et dont l'élément d'arrêt est formé par l'organe d'actionnement (22) tandis que l'élément de sortie estformé par l'organe de réglage (26), et
- un dispositif de rappel élastique (48, 50, 52; 70) qui agit entre l'élément de libération (24) et une partie fixe (16 ; 64) et exerce une force de rappel sur l'élément de libération (24) lorsque celui-ci est dévié dans une direction quelconque à partir de sa position initiale,
- dans lequel l'accouplement (20) comporte plusieurs paires de corps d'arrêt (32) qui sont logés dans un interstice entre une surface de roulement montée fixe par rapport à l'organe d'actionnement (22) et une surface de roulement montée fixe par rapport à l'organe de réglage (26), un corps d'écartement élastique (34) est inséré entre les corps d'arrêt (32) de chaque paire tandis que les portions de l'interstice situées entre les corps d'arrêt des différentes paires sont comblées par des doigts (36) de l'élément de libération (24), l'interstice se rétrécit en forme de coin à partir de chaque corps d'écartement (34) en direction des doigts voisins (36), et l'organe d'actionnement (22) est accouplé avec l'élément de libération (24) et n'est mobile dans chaque direction par rapport à celui-ci qu'en fonction d'un jeu limité.

2. Mécanisme de réglage selon une des revendications précédentes, **caractérisé en ce que** le dispositif de rappel comprend un ressort hélicoïdal (50), et **en ce que** l'élément de libération (24) ainsi que la partie fixe (16 ; 64) forment à chacune des extrémités du ressort hélicoïdal un contre-appui pour le ressort hélicoïdal.

3. Mécanisme de réglage selon la revendication 2, **caractérisé en ce que** l'organe d'actionnement (22), l'élément de libération (24) et l'organe de réglage (26) peuvent tourner autour d'un axe commun par rapport à la partie fixe (16; 64), et **en ce que** le ressort hélicoïdal (50) est logé dans une rainure en arc de cercle (48 ; 70) de la partiefixe et/ou de l'élément de libération, ladite rainure étant concentrique audit axe de rotation.

4. Mécanisme de réglage selon la revendication 2 ou 3, **caractérisé en ce que** le ressort hélicoïdal (50) est logé dans une rainure (48) de la partie fixe (16; 64) ou de l'élément de libération (24), **en ce que** les extrémités de cette rainure (48) forment les contreappuis de l'un des composants correspondants (16 ; 64) pour les extrémités du ressort hélicoïdal (50), et **en ce que** les contre-appuis de l'autre composant (24) sont formés par des tétons (52) qui sont mobiles dans la rainure (48) recevant le ressort hélicoïdal (50) ainsi que dans des rainures plus étroites (54) prolongeant ladite rainure.

5. Mécanisme de réglage selon la revendication 2 ou 3, **caractérisé en ce que** le ressort hélicoïdal (50) est logé pour moitié dans une rainure (48) de la partiefixe (16 ; 64) et pourmoitié dans une rainure (70), complémentaire à la précédente, de l'élément de libération (24), et en que les extrémités des deux rainures torment les contre-appuis pour le ressort hélicoïdal.

6. Mécanisme de réglage selon une des revendications précédentes, **caractérisé en ce que** l'organe de réglage (26) est un arbre, et **en ce que** l'organe d'actionnement (22) et l'élément de libération (24) sont disposés coaxialement sur ledit arbre.

7. Mécanisme de réglage selon une des revendications précédentes, **caractérisé par** un accouplement supplémentaire (56) manoeuvré en fonction de l'entrée, dont l'élément de libération est formé par l'organe de réglage (26) et dont l'élément de sortie est un fourreau (58) solidaire d'un boîtier, de sorte que l'élément d'arrêt (60) dudit accouplement peut être réglé par l'intermédiaire de l'organe de réglage (26) et bloqué dans la position de réglage choisie par l'intermédiaire du fourreau (58) solidaire du boîtier.

8. Mécanisme de réglage selon la revendication 7, **caractérisé en ce que** l'élément d'arrêt (60) de l'accouplement supplémentaire (56) comporte un logement (62) pour au moins une extrémité d'un câble de commande.

9. Mécanisme de réglage selon une des revendications précédentes, **caractérisé en ce que** l'organe de réglage (26) est accouplé indirectement ou directement à une transmission.
